# EUROPÄISCHE PATENTSCHRIFT

(11) **EP 4 118 311 B1**
(45) Veröffentlichungstag und Bekanntmachung des Hinweises auf die Patenterteilung: **17.05.2023**
(21) Anmeldenummer: 21712407.2
(22) Anmeldetag: 11.03.2021
(51) Int. Cl.: F02B 75/32, F02F 7/00, B23P 19/04

(54) **GROSS-BRENNKRAFTMASCHINE**
LARGE INTERNAL COMBUSTION ENGINE
MOTEUR À COMBUSTION INTERNE DE GRANDES DIMENSIONS

(30) Priorität: 13.03.2020 AT 502132020
(43) Veröffentlichungstag der Anmeldung: 18.01.2023
(73) Patentinhaber: AVL List GmbH, 8020 Graz (AT)
(72) Erfinder: MAIER, Gerhard, 8071 WAGERSBACH (AT)
(74) Vertreter: Babeluk, Michael
(86) Internationale Anmeldenummer: PCT/AT2021/060087
(87) Internationale Veröffentlichungsnummer: WO 2021/179029

(56) Entgegenhaltungen:
- DE-A1- 19 636 089
- DE-A1-102010 006 958
- DE-B3-102004 002 196
- US-A- 4 843 697

## Beschreibung

Die Erfindung betrifft eine Groß-Brennkraftmaschine mit einem Kurbelgehäuse, einer in diesem drehbar gelagerten Kurbelwelle sowie mit einem Kurbelwellenzapfen an dem eine Pleuelstange verschwenkbar angeordnet ist, wobei ein Kolben mit der Pleuelstange verbunden ist, der in einer Zylinderlaufbuchse hin-und-her verschiebbar ist, wobei das Kurbelgehäuse ein Oberdeck und ein Unterdeck mit je einer Öffnung für die Zylinderlaufbuchse aufweist in der diese angeordnet ist, und dass die Pleuelstange eine Ausbaubreite aufweist, die größer ist, als ein Außendurchmesser der Zylinderlaufbuchse.

Außerdem betrifft die Erfindung ein zugehöriges Verfahren zur Montage einer derartigen Groß-Brennkraftmaschine.

Unter Groß-Brennkraftmaschinen verstehen sich Brennkraftmaschinen mit Kolbendurchmesser von mehr als 140 mm, wie beispielsweise für die Anwendung als Schiffsdieselbrennkraftmaschine. Üblicherweise werden diese auch als Großmotoren bezeichnet.

Bei solchen Groß-Brennkraftmaschinen treten aufgrund der stark vergrößerten Abmessungen im Vergleich zu Brennkraftmaschinen für den Einsatz in Nutzfahrzeugen oder in Personenkraftfahrzeugen besondere Probleme und Herausforderungen auf.

Bei benötigten Zylinderdruckniveaus von 300 bar oder mehr sind besondere Designpunkte bei der Konstruktion erforderlich.

Durch die großen wirkenden Kräfte aufgrund des hohen Verbrennungsdrucks und der vergrößerten Abmessungen der Kurbelwellenzapfen muss das große Pleuelauge dementsprechend groß dimensioniert werden. Als das große Pleuelauge wird dabei das Lager der Pleuelstange am Kurbelwellenzapfen bezeichnet.

Allerdings ist neben den auftretenden Kräften auch der Aufwand bei der Montage erhöht. Aufgrund der großen Abmessungen ist das Gewicht nicht einfach von Hand anhebbar. Es bedarf zur Montage an Hilfsmitteln.

Bei Groß-Brennkraftmaschinen bereitet der Ausbau der Pleuelstange durch die Aufnahmebohrung der Zylinderlaufbuchse oft Probleme. Durch den steigenden Zylinderdruck ist es erforderlich Durchmesser von Zapfen der Kurbelwellen zu vergrö-ßern. Dadurch steigt auch der Durchmesser des großen Pleuelauges. Die vergrößerten Pleuelstangen können nun aber nicht mehr in einfacher Art und Weise durch die Aufnahmebohrung der Zylinderlaufbuchse im Kurbelgehäuse montiert und demontiert werden.

Die Aufnahmebohrungen für die Zylinderlaufbuchse können nicht so groß ausgeführt werden, um die Durchführung der Pleuelstange zu ermöglichen, denn das würde die Position von Zylinderkopfschrauben negativ beeinflussen und deren Abstand vom Zylinder unnötig vergrößern.

In der DE 10 2010 006 958 A1 wird die Montage von unten vorgeschlagen. Dies ist jedoch aufgrund der benötigten Hilfsmittel nicht einfach möglich. Außerdem ist daran nachteilig, dass die Pleuelstange nur allein und nicht gemeinsam mit anderen Bauteilen im Kurbelgehäuse montiert werden kann. Außerdem ist dies nur vor Einlegen der Kurbelwelle und nicht mehr danach möglich. Zum Austausch der Pleuelstange muss daher die gesamte Kurbelwelle ausgebaut werden, was zu einem erheblichen Mehraufwand führt und bei derart großen Brennkraftmaschinen, wie es bei Schiffsanwendungen der Fall ist, nicht mehr einfach durchzuführen ist. Aufgabe der vorliegenden Erfindung ist es daher, eine verbesserte Brennkraftmaschine und ein dazugehöriges einfacheres Verfahren zur Montage anzugeben.

Diese Aufgabe wird mit der vorliegenden Groß-Brennkraftmaschine erfindungsgemäß dadurch erreicht, dass zumindest das Oberdeck und das Unterdeck zur Montage der Pleuelstange zumindest eine Freistellung aufweist, und dass die entstehende Ausnehmung entlang eines Außendurchmessers der Zylinderlaufbuchse zumindest eine Ausbaubreite der Pleuelstange freigibt und eine Weite aufweist, die zumindest einer Breite der Pleuelstange entspricht.

Unter Ausbaubreite versteht sich hier die größte Erstreckung der Pleuelstange im Bereich des großen Pleuelauges in der Ebene des Durchmessers des Kurbelwellenzapfens (oder auch anders ausgedrückt in der Ebene normal auf eine Kolbenbolzendrehachse), die hier als Pleuelaugenebene bezeichnet wird.

Dadurch entsteht der Vorteil, dass die Pleuelstange einfach von oben, aus der Richtung des Zylinderkopfes eingebaut werden kann, ohne dass die Größe des großen Pleuelauges durch die Einbausituation eingeschränkt wird. Zum Ausbau der Pleuelstange ist nun kein Ausbau der Kurbelwelle mehr nötig.

Dabei ist irrelevant, ob die Pleuelstange symmetrisch oder asymmetrisch um das Pleuelauge ausgeführt ist. Bei symmetrischen Pleuelstangen können der Einfachheit der Fertigung halber zwei gleich ausgeführte Freistellungen an jeder Seite der Zylinderachse vorgesehen sein. Dadurch ist ein Einbau besonders einfach und ohne Verkanten bewerkstelligbar.

Im Kurbelgehäuse sind dadurch über die gesamte Höhe Freistellungen vorhanden, sodass die Pleuelstange mit einer größeren Ausbaubreite beim großen Pleuelauge als ein Außendurchmesser der Zylinderlaufbuchse durch die Öffnung der Zylinderlaufbuchse eingeführt und montiert werden kann.

Im montierten Zustand werden das Zylindergehäuse und die Zylinderlaufbuchse an der Freistellung oder den Freistellungen nicht durch das Kurbelgehäuse abgestützt.

Durch die zumindest eine Freistellung im Unterdeck beziehungsweise Oberdeck des Kurbelgehäuses wird Platz geschaffen, um die Pleuelstange einfach in Zylinderachsenrichtung zu montieren oder zu demontieren.

Durch die örtliche Freistellung des Kurbelgehäuses am Oberdeck und am Unterdeck werden kompaktere Motorabmessungen erzielt.

Unter Oberdeck versteht sich hier im Rahmen der Erfindung eine Ebene des Kurbelgehäuses, die zum Zylinderkopf hin die nächste Deckfläche des Kurbelgehäuses darstellt. Das Unterdeck ist ein Deck, das zwischen Oberdeck und der Kurbelwelle verortet ist. Oberdeck und Unterdeck nehmen unter anderem eine statische Funktion war, nämlich die Zylinderlaufbuchse zu halten und abzustützen.

Durch die obige Ausgestaltung der Groß-Brennkraftmaschine ist es möglich, dass die Pleuelstange von einer von der Kurbelwelle abgewandten Seite des Kurbelgehäuses über eine Öffnung für die Zylinderlaufbuchse in das Kurbelgehäuse eingebracht wird. Dadurch wird die Montage vereinfacht. Aufwand, Materialeinsatz und Kosten werden dadurch reduziert.

Dabei ist das Verfahren besonders vorteilig, wenn die Pleuelstange entlang von zumindest einer Freistellung an Oberdeck und/oder Unterdeck in das Kurbelgehäuse eingebracht wird. Dadurch wird die Pleuelstange an die richtige Position gelenkt und die Endmontage an der Kurbelwelle erleichtert.

Zur Erleichterung des Einbaus von symmetrischen Pleuelstangen ist günstigerweise in einer besonderen Ausführung vorgesehen, dass zumindest das Oberdeck zur Montage der Pleuelstange zumindest zwei Freistellungen und/oder das Unterdeck zur Montage der Pleuelstange zumindest zwei Freistellungen aufweist, die mit einer Ebene, die durch Zylinderachse und Kolbenbolzendrehachse gebildet wird, als Symmetrieebene symmetrisch angeordnet sind und dass die entstehende Ausnehmung zumindest eine Ausbaubreite der Pleuelstange freigibt und eine Weite aufweist, die zumindest einer Breite der Pleuelstange entspricht. Dadurch kann ein Verkanten während des Einbaus vermieden werden.

Dieser Vorteil wird insbesondere noch dadurch verstärkt, dass die Freistellung im Oberdeck und die Freistellung im Unterdeck im Wesentlichen fluchtend in Richtung der Zylinderachse angeordnet sind. Darüber hinaus ist kein Verdrehen der Pleuelstange bei der Montage nötig und daher besonders einfach und schnell durchführbar. Die fluchtenden Freistellungen, können aber auch unabhängig von der symmetrischen Anordnung der Freistellungen vorgesehen sein.

Es ist günstig, wenn ein Zylindergehäuse einen Absatz aufweist, der in einen Zentrierdurchmesser am Oberdeck eingreift. Dadurch ist die Montage im Kurbelgehäuse und die einzelne Positionierung der Bauteile zueinander besonders einfach durchführbar und eine Zentrierung einfach und zuverlässig.

Dieser Effekt wird verstärkt, wenn auch am Unterdeck eine Aufnahmebohrung mit einem Zentrierdurchmesser zur Aufnahme der Zylinderlaufbuchse vorgesehen ist.

Durch das Zylindergehäuse wird ein Wassermantel um die Zylinderlaufbuchse gebildet. Das Oberdeck verfügt über eine Auflagefläche für das Zylindergehäuse für den entstehenden Wassermantel. Das Oberdeck übernimmt damit außerdem die Funktion der Zentrierung des Zylindergehäuses im Kurbelgehäuse.

Zur Erhöhung der Steifigkeit des Kurbelgehäuses ist die oberste Begrenzungsfläche des Kurbelgehäuses, das Oberdeck verstärkt ausgeführt. Besonders vorteilhaft ist es, wenn die Wandstärke um die Öffnung für die Zylinderlaufbuchse erhöht ist.

Eine besonders vorteilhafte Ausführung sieht vor, dass die zumindest eine Freistellung als Durchlass zur Ölnebelabscheidung ausgebildet ist.

Zur Einsparung von Aufwand und Zeit ist es in einer besonders günstigen Ausgestaltung der Erfindung geplant, dass zumindest Zylinderlaufbuchse, Kolben und Pleuelstange zu einer ersten Einheit vormontierbar ausgeführt sind.

Dieser Vorteil wird sogar erhöht, wenn ein Zylinderkopf und ein Zylindergehäuse mit Zylinderlaufbuchse, Kolben und Pleuelstange zur ersten Einheit vormontierbar ausgeführt sind. Dies ist durch die besondere Ausgestaltung der Bauteile möglich. Dadurch lässt sich somit eine erste Einheit als Zylindereinheit zusammenbauen und im Kurbelgehäuse gemeinsam platzieren. Vormontiert sind vorteilhafterweise alternativ auch nur Zylinderkopf, Zylinderlaufbuchse sowie Pleuelstange und Kolben.

Dazu ist das günstige Verfahren derart gestaltet, dass die Pleuelstange vor der Montage an der Kurbelwelle mit der Zylinderlaufbuchse, und dem Kolben zu einer ersten Einheit verschraubt wird und gemeinsam mit dem Kurbelgehäuse verbunden wird, und dass vorzugsweise vor der Verbindung mit dem Kurbelgehäuse ein Zylindergehäuse und vorzugsweise ein Zylinderkopf mit der ersten Einheit verbunden werden.

In weiterer Folge wird die Erfindung anhand des nicht einschränkenden Ausführungsbeispiels in den Figuren näher erläutert. Es zeigen:
- Fig. 1: eine erfindungsgemäße Groß-Brennkraftmaschine in einer geschnittenen schematischen Darstellung;
- Fig. 2: einen Schnitt entlang der Linie II - II gemäß Fig. 1;
- Fig. 3: einen Schnitt entlang der Linie III - III gemäß Fig. 1;
- Fig. 4: ein Detail IV gemäß Fig. 1;
- Fig. 5: eine Ansicht gemäß Pfeil V in Fig. 4; und
- Fig. 6: ein Detail VI gemäß Fig. 1.

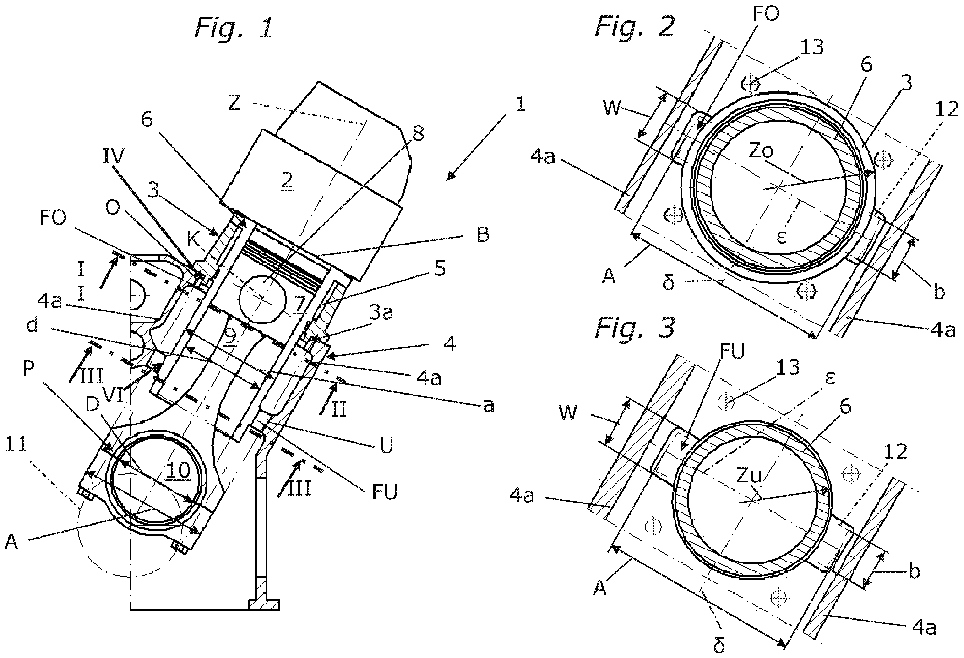

In Fig. 1 ist eine Groß-Brennkraftmaschine 1 gezeigt. Die von außen sichtbaren Bestandteile der Groß-Brennkraftmaschine 1 sind ein Zylinderkopf 2, ein Zylindergehäuse 3 und ein Kurbelgehäuse 4.

Durch das Zylindergehäuse 3 wird ein Wassermantel 5 um eine Zylinderlaufbuchse 6 ausgebildet. Durch das Zylindergehäuse 3 wird in dieser gezeigten Ausführung die Zylinderlaufbuchse 6 und damit auch der Zylinderkopf 2 gegenüber dem Kurbelgehäuse 4 abgestützt. Dafür liegt das Zylindergehäuse 3 an einem Oberdeck O an. Die Zylinderlaufbuchse 6 ist in einer Öffnung des Kurbelgehäuses 3 angeordnet, wobei ein Außendurchmesser der Öffnung und somit der Zylinderlaufbuchse 6 mit a bezeichnet wird. Ein Innendurchmesser der Zylinderlaufbuchse 6 wird mit d bezeichnet.

Ein Unterdeck U ist ein tiefer im Kurbelgehäuse 4 platziertes Deck mit einer erhöhten Wandstärke gegenüber anderen Begrenzungswänden 4a des Kurbelgehäuses 4 zur Erhöhung der Steifigkeit des Kurbelgehäuses 4. Das Unterdeck U ist dabei in einem Bereich angeordnet, der in der Nähe eines Endes der Zylinderlaufbuchse 6 das vom Zylinderkopf 2 abgewandt ist, verortet ist. Das Unterdeck U dient dabei zur Aufnahme dieses unteren Bereichs der Zylinderlaufbuchse 6. Darüber hinaus können auch Butzen für Zylinderkopfschrauben 13 (siehe Fig. 2 bis Fig. 4) eingebunden sein.

Das Kurbelgehäuse 4 weist Gusswände als Begrenzungswände 4a auf, über die das Oberdeck O und das Unterdeck U miteinander verbunden sind. Die von den Zylinderkopfschrauben 13 herrührenden Schraubenkräfte werden über Oberdeck O, Begrenzungswände 4aund eventuell über das Unterdeck U in die gesamte Struktur des Kurbelgehäuses 4 eingebracht.

Ein Brennraum B wird durch Zylinderlaufbuchse 6, Zylinderkopf 2 und durch einen in der Zylinderlaufbuchse 6 verschiebbaren Kolben 7 umhüllt. Innerhalb des Brennraums B wird ein zündfähiges Gemisch explosionsartig verbrannt und damit der Kolben 7 vom Zylinderkopf 2 wegbewegt.

Der Kolben 7 ist über einen Kolbenbolzen 8 schwenkbar mit einer Pleuelstange 9 verbunden. Diese Pleuelstange 9 ist ihrerseits wiederum schwenkbar an einem Kurbelwellenzapfen 10 einer im Kurbelgehäuse 4 drehbar montierten Kurbelwelle 11 gelagert. Die Kurbelwelle 11 ist zur besseren Sichtbarkeit nur strich-punktiert angedeutet. Das Lager, mit dem die Pleuelstange 9 an der Kurbelwelle 11 gekoppelt ist, wird als großes Pleuelauge P bezeichnet.

Bei Groß-Brennkraftmaschinen mit Zünddrücken von 250 bar bis 300 bar werden Durchmesser D des Kurbelwellenzapfens 10 von etwa 90 % bis 100 % des Innendurchmessers d der Zylinderlaufbuchse 6 beziehungsweise der Öffnung des Kurbelgehäuses 4 erforderlich.

Gerade geteilte Pleuelstangen 9 werden durch diesen Umstand zu breit, um die Pleuelstange 9 beziehungsweise ein Pleueloberteil, das im montierten Zustand zwischen Kurbelwelle 11 und Kolben 7 angeordnet ist, durch die Öffnung für die Zylinderlaufbuchse 6 eingebracht zu werden oder hieraus wieder demontiert zu werden.

Vor allem geteilte Pleuelstangen 9 sind ob ihrer besser beherrschbaren Situation in der Teilungsebene aufgrund von Verzahnungsgeometrien gegenüber schräggeteilten Pleuelstangen 9 im Vorteil, wenngleich schräggeteilte Pleuelstangen 9 Vorteile bei einer Ausbaubreite A aufweisen können.

Die Ausbaubreite A bezeichnet dabei die größte Erstreckung der Pleuelstange 9 im Bereich des großen Pleuelauges P in der Ebene des Durchmessers D des Kurbelwellenzapfens 10, der Pleuelaugenebene ε. Die Pleuelaugenebene ε entspricht dabei einer Ebene normal auf eine Kolbenbolzendrehachse K.

Um den Einbau von oben einfach zu ermöglichen ist im Oberdeck O jeweils symmetrisch um eine Ebene δ festgelegt durch Zylinderachse Z und Kolbenbolzendrehachse K eine Freistellung FO vorgesehen. Auch im Unterdeck U ist jeweils symmetrisch um diese Ebene δ eine Freistellung FU konstruiert worden.

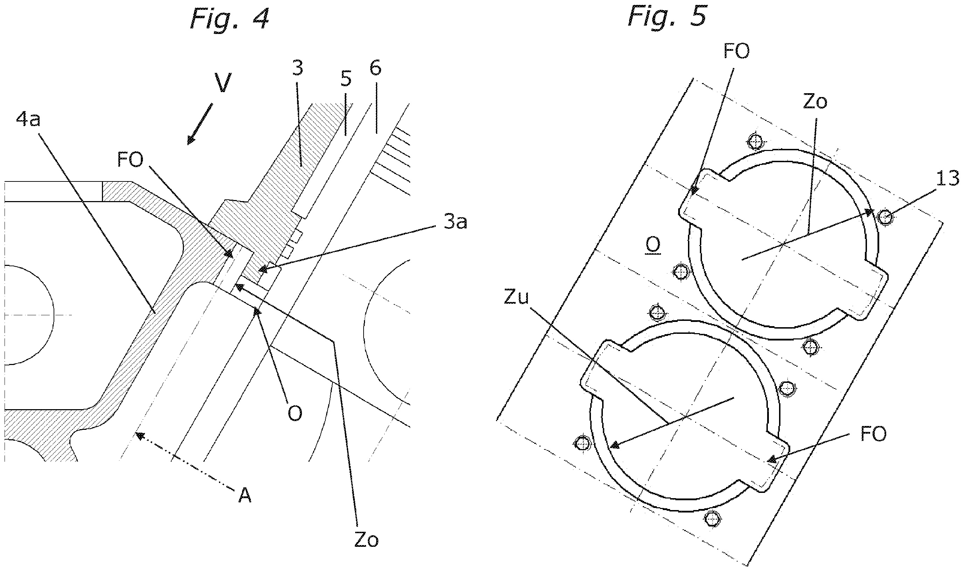

Im Oberdeck O ist eine Aufnahmebohrung mit einem Zentrierdurchmesser Zo für das Zylindergehäuse 3 vorgesehen. Diese bildet dabei einen Absatz 3a im Bereich der Freistellungen FO, und greift im Bereich der Öffnung am Oberdeck O in den Zentrierdurchmesser Zo ein, siehe insbesondere Fig. 4 und Fig. 5.

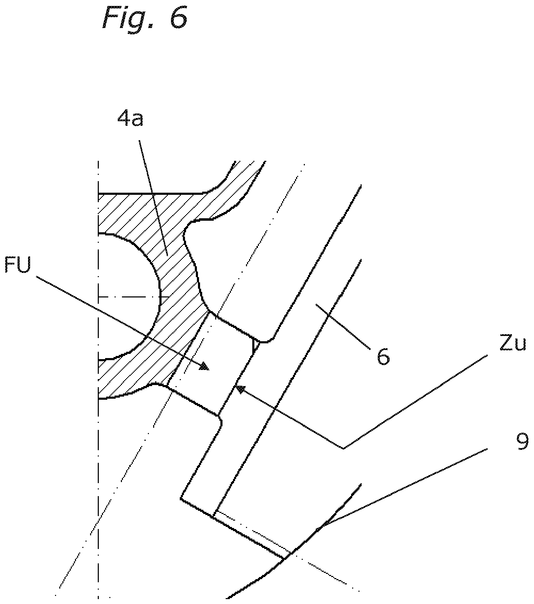

Im Unterdeck U ist vorteilhafterweise ein Zentrierdurchmesser Zu zur Zentrierung der Zylinderlaufbuchse 6 vorhanden, siehe Fig. 5 und Fig. 6.

Bei beiden vorteilhaften Konzepten der Teilung der Pleuelstangen 9 - ob gerade oder schräge Teilung - bringt eine örtliche Freistellung FO, FU der Deckebenen O, U des Kurbelgehäuses 4 Verbesserungen bei Montage und Demontage der Pleuelstange 9.

Außerdem ist eine gemeinsame Montage einer ersten Einheit möglich. Diese erste Einheit besteht hier aus Oberteil der Pleuelstange 9, Kolben 7, Zylinderlaufbuchse 6 und Zylinderkopf 2 mit Wassermantel und eventuell sogar aus Zylindergehäuse 3 mit Wassermantel 5.

Diese erste Einheit wird gemäß einer vorteilhaften Ausgestaltung des erfindungsgemäßen Verfahrens vormontiert und von oben aus Richtung des Zylinderkopfes 2 in das Kurbelgehäuse 4 eingesetzt.

Dabei wird die erste Einheit entlang der Öffnung für die Zylinderlaufbuchse 6 zuerst durch das Oberdeck O und dann durch das Unterdeck U geführt. Die Pleuelstange 9 im Bereich des großen Pleuelauges P ist dabei durch die strichpunktierte Linie mit Bezugszeichen 12 angedeutet. Eine Breite b der Pleuelstange 9 und die Ausbaubreite A sind jeweils ein wenig kleiner als der Bereich, der durch die Freistellung FO im Oberdeck O und durch die Freistellung FU im Unterdeck U freigegeben wird. Die Freistellung FO und die Freistellung FU weisen dazu eine Weite W auf, die hier jeweils etwa ein Fünftel größer ist als die Breite b der Pleuelstange 9.

Die Freistellungen FO und FU sind dabei in der gezeigten Groß-Brennkraftmaschine 1 etwa rund um die Kontur 12 der Pleuelstange 9 konstruiert, sodass ein Normalabstand zwischen Öffnung und Kontur 12 der Pleuelstange 9 entsteht, der etwa 20 % der Breite b der Pleuelstange 9 entspricht.

Fig. 2 zeigt einen Schnitt im Bereich der oberen Freistellung FO. Dabei ist der Zentrierdurchmesser Zo als äußerster Durchmesser im Oberdeck O innerhalb der Begrenzungswände 4a des Kurbelgehäuses 4 sichtbar. Radial innerhalb des Zentrierdurchmessers Zo sind nacheinander eine erste Fläche und eine zweite Fläche am Zylindergehäuse 3 und eine Fläche an der Zylinderlaufbuchse 6 sowie eine Schnittfläche der Zylinderlaufbuchse 6 an den Zentrierdurchmesser Zo angeordnet.

Die radial äußere Fläche des Zylindergehäuses 3, die außen in etwa (Fertigungstoleranzen) den Zentrierdurchmesser Zo aufweist, stellt die Oberfläche zur Kurbelwelle 11 des Absatzes 3a des Zylindergehäuses 3 dar. Im Zentrum um die Zylinderachse Z ist der - hier nicht dargestellte - Kolben 7 angeordnet.

Um die Ausnehmung für das Zylindergehäuse 3 sind am Oberdeck O die Positionen der Zylinderkopfschrauben 13 gezeigt.

Fig. 3 zeigt eine Ansicht von der Kurbelwelle 11 her auf das Unterdeck U. Symmetrisch um die Ebene δ sind zwei untere Freistellungen FU angeordnet. Die Aufnahmebohrung für die Zylinderlaufbuchse 6 weist den Zentrierdurchmesser Zu auf. Radial innerhalb des Zentrierdurchmessers Zu ist die Zylinderlaufbuchse 6 angeordnet. Innerhalb der Zylinderlaufbuchse 6 ist wiederum der hier nicht näher gezeigte Kolben 7 angeordnet.

Gut erkennbar sind in Fig. 2 und Fig. 3 jeweils die Weite W der oberen Freistellung FO und der unteren Freistellung FU. In der gezeigten Ausführung sind die beiden Weiten W gleich groß. In alternativen Ausführungen ist eine unterschiedliche Weite W für die unterschiedlichen Freistellungen möglich.

Die Pleuelstange 9 weist eine Breite b und eine Ausbaubreite A auf, wobei die Pleuelstange 9 nur strichpunktiert angedeutet ist.

Fig. 4 zeigt ein Detail gemäß Pfeil IV in Fig. 1. Das Detail zeigt die Begrenzungswände 4a des Kurbelgehäuses 4 und das Oberdeck O mit der oberen Freistellung FO. Innerhalb des Zentrierdurchmesser Zo ist der Absatz 3a des Zylindergehäuses 3 angeordnet. In Richtung der Zylinderachse Z grenzt die Zylinderlaufbuchse 6 an das Zylindergehäuse 3 an. Zwischen Zylindergehäuse 3 und Zylinderlaufbuchse 6 ist ein Wassermantel 5 ausgebildet.

In Fig. 5 wird das Oberdeck O und die sichtbaren Öffnungen - obere Freistellung FO und damit fluchtende untere Freistellung FU sowie der Zentrierdurchmesser Zo und der Zentrierdurchmesser Zu gezeigt. Es ist erkennbar, dass der obere Zentrierdurchmesser Zo größer ist als der untere Zentrierdurchmesser Zu.

Fig. 6 zeigt analog zu Fig. 4 ein Detail gemäß Pfeil VI in Fig. 1. Wiederum sichtbar sind das Kurbelgehäuse 4a und das Unterdeck U mit der unteren Freistellung FU und die Zylinderlaufbuchse 6 innerhalb des unteren Zentrierdurchmessers Zu. Die Kontur der Pleuelstange 9 ist nur leicht angedeutet.

Die beiden Freistellungen FO und FU können in einer alternativen Ausführung aus Gründen des Designs leicht zu einer fluchtenden Ausführung verdreht sein. Dabei wird eine möglichst geringe Verdrehung bevorzugt. Zur Montage wird dabei die Pleuelstange 9 zuerst durch die obere Freistellung FO geführt, dann verdreht und durch die untere Freistellung FU geführt. Zuletzt kann es notwendig sein, die Pleuelstange 9 erneut in die Pleuelaugenebene ε zu verdrehen.

## Patentansprüche

1. Groß-Brennkraftmaschine (1) mit einem Kurbelgehäuse (4), einer in diesem drehbar gelagerten Kurbelwelle (11) sowie mit einem Kurbelwellenzapfen (10), an dem zumindest eine Pleuelstange (9) verschwenkbar angeordnet ist, wobei ein Kolben (7) mit der Pleuelstange (9) verbunden ist, der in einer Zylinderlaufbuchse (6) hin- und-her verschiebbar ist, wobei das Kurbelgehäuse (4) ein Oberdeck (O) und ein Unterdeck (U) mit je einer Öffnung für die Zylinderlaufbuchse (6) aufweist, in der diese angeordnet ist, und dass die Pleuelstange (9) eine Ausbaubreite (A) aufweist, die größer ist als der Außendurchmesser (a) der Zylinderlaufbuchse (6), **dadurch gekennzeichnet, dass** zumindest das Oberdeck (O) und das Unterdeck (U) zur Montage der Pleuelstange (9) zumindest eine Freistellung (FO, FU) aufweist, und dass die entstehende Ausnehmung entlang des Außendurchmessers (a) der Zylinderlaufbuchse (6) zumindest eine Ausbaubreite (A) der Pleuelstange (9) freigibt und eine Weite (W) aufweist, die zumindest einer Breite (b) der Pleuelstange (9) entspricht.

2. Groß-Brennkraftmaschine (1) nach Anspruch 1, **dadurch gekennzeichnet, dass** zumindest das Oberdeck (O) und das Unterdeck (U) zur Montage der Pleuelstange (9) zumindest je zwei Freistellungen (FO, FU) aufweist, die um die Ebene (δ) symmetrisch angeordnet sind und dass die entstehende Ausnehmung zumindest eine Ausbaubreite (A) der Pleuelstange (9) freigibt und eine Weite (W) aufweist, die zumindest einer Breite (b) der Pleuelstange (9) entspricht.

3. Groß-Brennkraftmaschine (1) nach Anspruch 1 oder 2, **dadurch gekennzeichnet, dass** die Freistellung (FO) im Oberdeck (O) und die Freistellung (FU) im Unterdeck (U) im Wesentlichen fluchtend in Richtung einer Zylinderachse (Z) angeordnet sind.

4. Groß-Brennkraftmaschine (1) nach einem der Ansprüche 1 bis 3, **dadurch gekennzeichnet, dass** ein Zylindergehäuse (3) einen Absatz (3a) aufweist, der in einen Zentrierdurchmesser (Zo) am Oberdeck (O) eingreift.

5. Groß-Brennkraftmaschine (1) nach einem der Ansprüche 1 bis 4, **dadurch gekennzeichnet, dass** die zumindest eine Freistellung (FO, FU) als Durchlass zur Ölnebelabscheidung ausgebildet ist.

6. Groß-Brennkraftmaschine (1) nach einem der Ansprüche 1 bis 5, **dadurch gekennzeichnet, dass** zumindest Zylinderlaufbuchse (6), Kolben (7) und Pleuelstange (9) zu einer ersten Einheit vormontierbar ausgeführt sind.

7. Groß-Brennkraftmaschine (1) nach Anspruch 6, **dadurch gekennzeichnet, dass** ein Zylinderkopf (2) und ein Zylindergehäuse (3) mit Zylinderlaufbuchse (6), Kolben (7) und Pleuelstange (9) zur ersten Einheit vormontierbar ausgeführt sind.

8. Verfahren zur Montage einer Groß-Brennkraftmaschine (1) nach einem der Ansprüche 1 bis 7, **dadurch gekennzeichnet, dass** die Pleuelstange (9) von einer von der Kurbelwelle (11) abgewandten Seite des Kurbelgehäuses (4) über eine Öffnung für die Zylinderlaufbuchse (6) in das Kurbelgehäuse (4) eingebracht wird, wobei die Pleuelstange (9) entlang von zumindest einer Freistellung (FO, FU) an Oberdeck (O) und/oder Unterdeck (U) in das Kurbelgehäuse (4) eingebracht wird.

9. Verfahren nach Anspruch 8, **dadurch gekennzeichnet, dass** die Pleuelstange (9) entlang der Freistellung (FO, FU) beim Einbringen in das Kurbelgehäuse (4) bewegt wird, wobei zumindest eine Freistellung (FO, FU) an zumindest Oberdeck (O) oder Unterdeck (U) gegenüber einer Pleuelaugenebene (ε) verdreht ist und die Pleuelstange (9) zur Einbringung gegenüber der endgültigen Pleuelaugenebene (ε) verdreht wird.

10. Verfahren nach einem der Ansprüche 8 oder 9, **dadurch gekennzeichnet, dass** die Pleuelstange (9) vor der Montage an der Kurbelwelle (11) mit der Zylinderlaufbuchse (6), und dem Kolben (7) zu einer ersten Einheit verschraubt wird und gemeinsam mit dem Kurbelgehäuse (4) verbunden wird.

11. Verfahren nach Anspruch 10, **dadurch gekennzeichnet, dass** vor der Verbindung mit dem Kurbelgehäuse (4) ein Zylindergehäuse (3) und vorzugsweise ein Zylinderkopf (2) mit der ersten Einheit verbunden werden.

## Claims

1. Large internal combustion engine (1) having a crankcase (4), a crankshaft (11) rotatably mounted therein and a crankshaft journal (10) on which at least one connecting rod (9) is pivotably arranged, wherein a piston (7) is connected to the connecting rod (9), which can be displaced back and forth in a cylinder liner (6), wherein the crankcase (4) has an upper deck (O) and a lower deck (U) with in each case one opening for the cylinder liner (6), in which opening said cylinder liner (6) is arranged, and in that the connecting rod (9) has an extent width (A) which is greater than the outside diameter (a) of the cylinder liner (6), **characterised in that** at least the upper deck (O) and the lower deck (U) has at least one clearance (FO, FU) for mounting the connecting rod (9), and **in that** the resulting recess along the outside diameter (a) of the cylinder liner (6) opens up at least one extent width (A) of the connecting rod (9) and has a breadth (W) which corresponds to at least a width (b) of the connecting rod (9).

2. Large internal combustion engine (1) according to claim 1, **characterised in that** at least the upper deck (O) and the lower deck (U) for mounting the connecting rod (9) has at least two clearances (FO, FU) in each case, which are arranged symmetrically about the plane (δ), and **in that** the resulting recess clears at least one extent width (A) of the connecting rod (9) and has a breadth (W) which corresponds to at least one width (b) of the connecting rod (9).

3. Large internal combustion engine (1) according to claim 1 or 2, **characterised in that** the clearance (FO) in the upper deck (O) and the clearance (FU) in the lower deck (U) are arranged substantially aligned in the direction of a cylinder axis (Z).

4. Large internal combustion engine (1) according to one of claims 1 to 3, **characterised in that** a cylinder housing (3) has a shoulder (3a) that engages a centering diameter (Zo) on the upper deck (O).

5. Large internal combustion engine (1) according to one of claims 1 to 4, **characterised in that** the at least one clearance (FO, FU) is designed as a passage for oil mist separation.

6. Large internal combustion engine (1) according to one of claims 1 to 5, **characterised in that** at least cylinder liner (6), piston (7) and connecting rod (9) are designed to be pre-assembled to form a first unit.

7. Large internal combustion engine (1) according to claim 6, **characterised in that** a cylinder head (2) and a cylinder housing (3) with cylinder liner (6), piston (7) and connecting rod (9) are designed to be pre-assembled to form the first unit.

8. Method for mounting a large internal combustion engine (1) according to one of claims 1 to 7, **characterised in that** the connecting rod (9) is introduced into the crankcase (4) from a side of the crankcase (4) facing away from the crankshaft (11) via an opening for the cylinder liner (6), wherein the connecting rod (9) is introduced into the crankcase (4) along at least one clearance (FO, FU) at the upper deck (O) and/or lower deck (U).

9. Method according to claim 8, **characterised in that** the connecting rod (9) is moved along the clearance (FO, FU) during insertion into the crankcase (4), wherein at least one clearance (FO, FU) at at least the upper deck (O) or lower deck (U) is twisted relative to a connecting rod eye plane (ε) and the connecting rod (9) is twisted relative to the final connecting rod eye plane (ε) for insertion.

10. Method according to one of the claims 8 or 9, **characterised in that** the connecting rod (9) is screwed together with the cylinder liner (6) and the piston (7) to form a first unit before being mounted on the crankshaft (11) and is connected together with the crankcase (4).

11. Method according to claim 10, **characterised in that** a cylinder housing (3) and preferably a cylinder head (2) are connected to the first unit prior to the connection to the crankcase (4).

## Revendications

1. Machine à combustion interne de grandes dimensions (1) comportant un carter moteur (4), un vilebrequin (11) monté à rotation dans celui-ci ainsi qu'un maneton de vilebrequin (10) recevant en pivotement au moins une bielle (9) à laquelle est relié un piston (7) coulissant selon un mouvement alternatif dans une chemise de cylindre (6),
- le carter moteur (4) ayant un voile supérieur (O) et un voile inférieur (U) avec un orifice respectif pour recevoir la chemise de cylindre (6),
la bielle (9) ayant une largeur de démontage (A) supérieure au diamètre extérieur (a) de la chemise (6),
moteur **caractérisé en ce que**
- au moins le voile supérieur (O) et le voile inférieur (U) ont au moins un dégagement (FO, FU) pour le montage de la bielle (9), et
- cet évidement ainsi réalisé laisse le long du diamètre extérieur (a) de la chemise (6), au moins une largeur de démontage (A) de la bielle (9) et qui a une largeur (W) qui correspond au moins à la largeur (b) de la bielle (9).

2. Moteur à combustion interne de grandes dimensions (1) selon la revendication 1,
**caractérisé en ce que**
au moins le voile supérieur (O) et le voile inférieur (U) ont pour le montage de la bielle (9), au moins deux dégagements (FO, FU) symétriques par rapport au plan (δ), et
cet évidement ainsi réalisé libère au moins une largeur de démontage (A) de la bielle (9) et a une largeur (W) qui correspond au moins à la largeur (b) de la bielle (9).

3. Moteur à combustion interne de grandes dimensions (1) selon la revendication 1 ou 2,
**caractérisé en ce que**
le dégagement (FO) dans le voile supérieur (O) et le dégagement (FU) dans le voile inférieur (U) sont pratiquement alignés dans la direction de l'axe de cylindre (Z).

4. Moteur à combustion interne de grandes dimensions (1) selon l'une des revendications 1 à 3,
**caractérisé en ce que**
le carter de cylindre (3) a un épaulement (3a) qui pénètre dans un diamètre de centrage (Zo) du voile haut (O).

5. Moteur à combustion interne de grandes dimensions (1) selon l'une des revendications 1 à 4,
**caractérisé en ce que**
au moins un dégagement (FO, FU) est réalisé sous la forme d'un passage de déshuilage.

6. Moteur à combustion interne de grandes dimensions (1) selon l'une des revendications 1 à 5,
**caractérisé en ce que**
la chemise (6), le piston (7) et la bielle (9) sont préassemblés pour former un premier ensemble.

7. Moteur à combustion interne de grandes dimensions (1) selon la revendication 6,
**caractérisé en ce que**
la tête de cylindre (2) et le carter de cylindre (3) avec la chemise (6), le piston (7) et la bielle (9) sont préassemblés pour former un premier ensemble.

8. Procédé de montage d'un moteur à combustion interne de grandes dimensions (1) selon l'une des revendications 1 à 7,
**caractérisé en ce que**
la bielle (9) s'introduit à partir du côté du carter de vilebrequin (4) opposé au vilebrequin (11) par une ouverture pour la chemise (6) dans le carter de vilebrequin (4), la bielle (9) se logeant selon au moins un dégagement (FO, FU) du voile supérieur (O) et/ou du voile inférieur (U) dans le carter de vilebrequin (4).

9. Procédé selon la revendication 8,
**caractérisé en ce que**
l'on bouge la bielle (9) le long du dégagement (FO, FU) lors de l'introduction dans le carter de vilebrequin (4), au moins un dégagement (FO, FU) au moins du voile supérieur (O) ou du voile inférieur (U) est tourné par rapport au plan de l'oeil de bielle (ε) et on tourne la bielle (9) pour l'introduire, par rapport au plan définitif de l'oeil de bielle (ε).

10. Moteur à combustion interne de grandes dimensions selon l'une des revendications 8 ou 9,
**caractérisé en ce que**
avant le montage sur le vilebrequin (11), la bielle (9) est vissée à la chemise de cylindre (6) et au piston (7) pour former une unité et l'ensemble est relié en commun avec le carter de vilebrequin (4).

11. Moteur à combustion interne de grandes dimensions selon la revendication 10,
**caractérisé en ce que**
avant de relier au carter de vilebrequin (4), on relie un carter de cylindre (3) et de préférence une culasse (2) à la première unité.
